# EUROPEAN PATENT SPECIFICATION

(11) **EP 2 163 943 B1**
(45) Date of publication and mention of the grant of the patent: **18.12.2013**
(21) Application number: 09011210.3
(22) Date of filing: 01.09.2009
(51) Int. Cl.: G02F 1/1345

(54) **Liquid crystal display device**
Flüssigkristallanzeigevorrichtung
Dispositif d'affichage à cristaux liquides

(30) Priority: 11.09.2008 JP 2008233052
(43) Date of publication of application: 17.03.2010
(73) Proprietor: Hitachi Displays, Ltd., Mobara-shi Chiba (JP); Panasonic Liquid Crystal Display Co., Ltd., Shikama-ku, Himeji-shi Hyogo 672-8033 (JP)
(72) Inventor: Yamada, Yasuyuki, Mobara-shi, Chiba (JP); Sugiyama, Saori, Mobara-shi, Chiba (JP)
(74) Representative: Beetz & Partner

(56) References cited:
- JP-A- 2005 275 054
- US-A1- 2004 252 266

## Description

### CROSS-REFERENCE TO RELATED APPLICATION

The present application claims priority over Japanese Application JP 2008-233052 filed on September 11, 2008.

### BACKGROUND OF THE INVENTION

### (1) Field of the Invention

The present invention relates to a liquid crystal display device, and in particular, to a liquid crystal display device having a conductive film (shield film) that covers signal wires and the like formed around the display region with an insulating film in between.

### (2) Description of the Related Art

Active matrix type liquid crystal display devices (panels) have a pair of substrates provided so as to face each other with liquid crystal sandwiched in between as an outer frame in which a display region is formed of a set of a number of pixels arranged in a matrix. A liquid crystal layer is sealed between the pair of substrates with an annular sealing material formed so as to surround the above described display region in the configuration.

In addition, a number of signal wires (lead wires), which are led from the region outside the sealing material, are formed in the outer periphery of the display region which is within the region surrounded by the sealing material, and these signal wires are electrically connected to the gate signal lines, the drain signal lines and the reference signal lines, for example, in the display region.

In this case, it is known that a relatively large electrical field leaks from the lead wires that are electrically connected to the gate signal lines, for example, and this leaking electrical field negatively affects the liquid crystal in the display region adjacent to the lead wires. Therefore, a conductive film may be formed so as to cover the above described lead wires via an insulating film so that the conductive film functions as a shield film against the above described electrical field, and such a technology is disclosed in JP 2005-275054A, for example. In addition, in JP 2005-275054A the above described conductive film is formed so as to have the same potential as the counter electrodes in order to avoid floating in a so-called IPS (in plane switching) type liquid crystal display device.

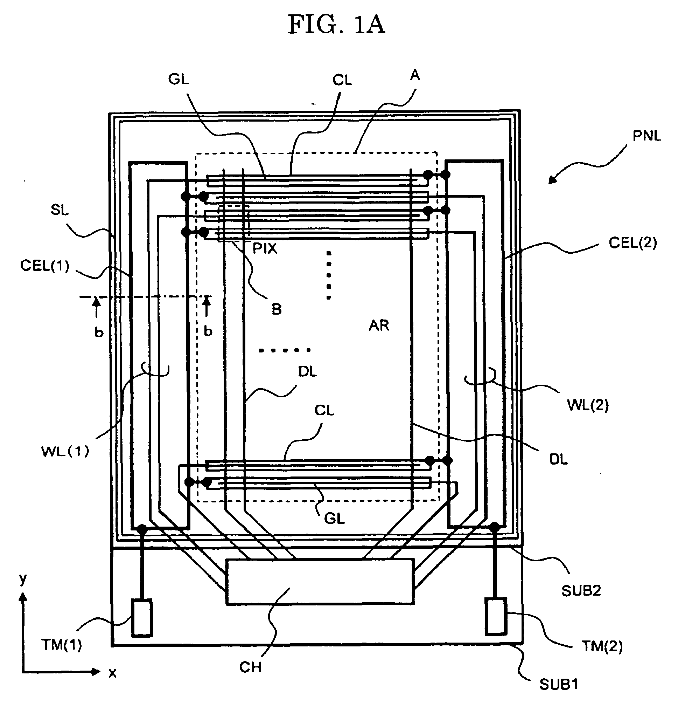

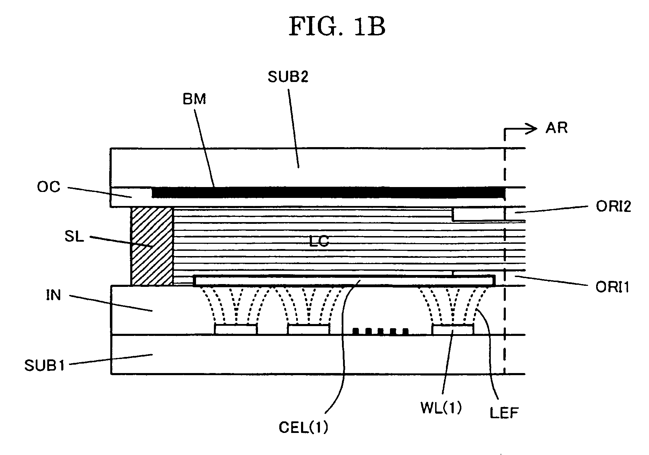

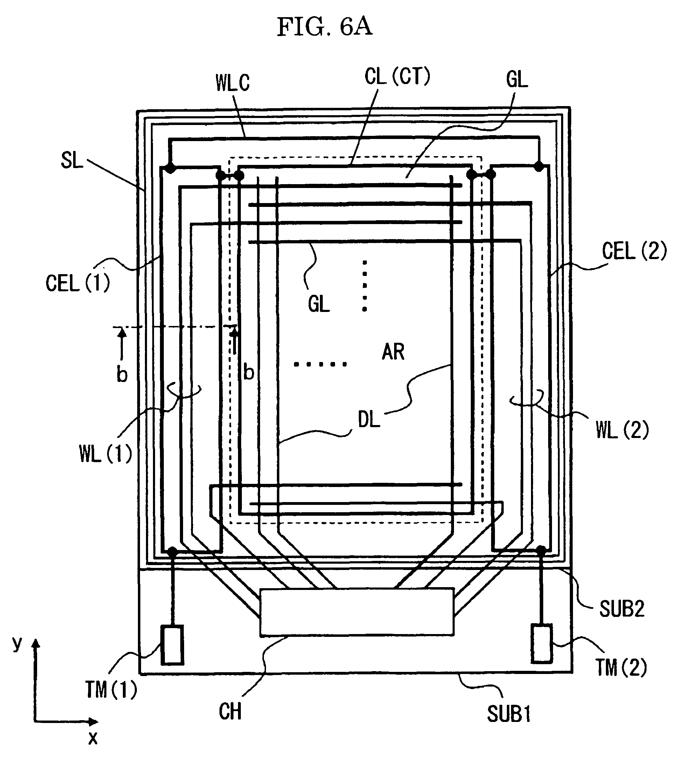

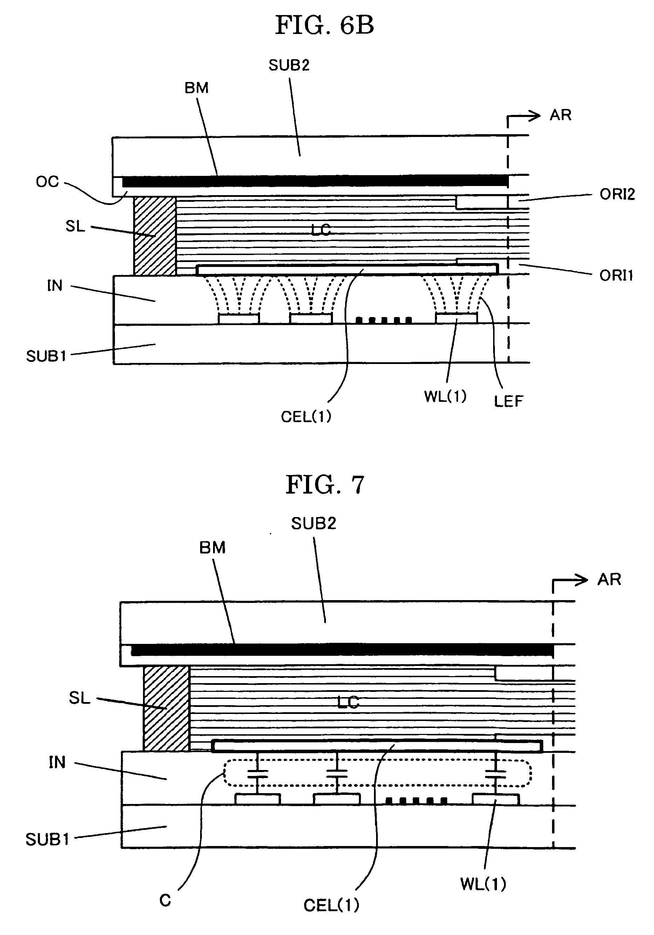

FIG. 6A and FIG. 6B are diagrams showing the configuration of a conventional IPS type liquid crystal display device where the gate signal lines GL within the display region AR include those where a signal is supplied from an end on one side and those where a signal is supplied from an end on the other side. Here, FIG. 6A is a plan diagram and FIG. 6B is a cross sectional diagram along line b-b in FIG. 6A, and they respectively correspond to FIG. 1A and FIG. 1B, which show an embodiment of the present invention. Therefore, only the part of the configuration that makes the prior art disadvantageous is described in the following. Please see the detailed descriptions for the configuration of the other parts in reference to FIG. 1A and FIG. 1B.

In FIG. 6A and FIG. 6B, substrates SUB1 and SUB2 are provided so as to sandwich liquid crystal LC, and this liquid crystal LC is sealed with a sealing material SL. A display region AR is formed on the surface of the substrate SUB 1 on the liquid crystal LC side surrounded by the sealing material SL with a small gap between the sealing material SL and the display region AR. A number of pixels (not shown) are provided in a matrix on the display region AR, and gate signal lines GL, drain signal lines DL and common signal lines CL, which are required to drive these pixels, are provided.

Here, the common signal lines CL are integrally formed with the counter electrodes CT, which are formed in the respective pixels, and are formed of surface conductive films together with the counter electrodes CT in approximately the entirety of the display region AR. A reference signal for a video signal supplied to a drain signal line DL is supplied to a common signal line CL so that the same potential is applied to the counter electrode CT in each pixel in the display of at least one frame when the system is driven.

The gate signal lines GL are aligned in the direction y in the figure, and every other line is electrically connected to a lead wire WL provided at the left side of the display region AR in the figure (denoted as WL (1) in the figure), while the remaining gate signal lines GL are electrically connected to the lead wires WL provided at the right side of the display region AR in the figure (denoted as WL (2) in the figure).

A conductive film CEL (denoted as CEL (1) in the figure) is formed in the region where the lead wires WL (1) are formed so as to cover the lead wires WL (1) via an insulating film IN, while a conductive film CEL (denoted as CEL (2) in the figure) is formed in the region where the lead wires WL (2) are formed so as to cover the lead wires WL (2) via an insulating film IN. The conductive films CEL (1) and CEL (2) are electrically connected to each other via a wire WLC provided on the upper side of the display region AR, for example, and at the same time, electrically connected to the common signal line CL so that the same potential as in the counter electrodes CT is provided in the configuration where floating is avoided. These conductive films CEL (1) and CEL (2) both function as a shield film against an electrical field with which an electrical field LEF leaking from the lead wires WL (1) and the lead wires WL (2) can be prevented from distributing so as to reach the liquid crystal LC on the display region AR.

Here, a reference signal is supplied to the above described conductive film CEL (1) and conductive film CEL (2) separately from the terminals TM (1) and TM (2) formed on the surface of the substrate SUB1 in the region outside of the sealing material SL.

### SUMMARY OF THE INVENTION

Meanwhile, in the case where each common signal line CL is formed between a pair of adjacent gate signal lines GL along the gate signal lines GL, and at the same time, the common signal lines CL include those to which a signal is supplied from an end on one side and those to which a signal is supplied from an end on the other side in the above described configuration (in the case of a so-called two wire system), a new problem is found.

That is to say, as shown in FIG. 7, which corresponds to FIG. 6B, a relatively large parasitic capacitance C is provided between the lead wires WL (1) and the conductive film CEL (1) when the conductive film CEL (1) is formed.

In this case where a reference signal is supplied to the above described common signal lines CL through the two systems, there is a great difference in the parasitic capacitance between first and second common signal lines CL when such a connection where one reference signal is supplied to the first common signal lines CL through the above described conductive film CEL (for example, conductive film CEL (1)) and the other reference signal is supplied to the second common signal lines CL without passing through the above described conductive film CEL (for example, conductive film CEL (2)) is used while maintaining the connection between the conductive film CEL (1) and the conductive film CEL (2).

As a result, there is a difference in the time constant, which is defined as the product of the above described parasitic capacitance and the resistance value of the common signal lines CL, and this difference in the time constant leads to a difference in the distortion of the wave form of the reference signal supplied to the common signal lines CL, and thus, there is a disadvantage with the display region AR in that the brightness is inconsistent.

A merit of the present invention is to provide a liquid crystal display device having such a configuration that the difference in the parasitic capacitance between a number of conductive films, which are formed so as to cover the signal wires formed around the display region via an insulating film and the signal wires covered by these conductive films, can be reduced.

In the liquid crystal display device according to the present invention, some common signal lines that are aligned in parallel are connected to one conductive film and the remaining common signal lines are connected to the other conductive film, and these conductive films are electrically isolated from each other so that signals can be supplied independently in the configuration. As a result, the difference between the parasitic capacitance induced to one conductive film and the parasitic capacitance induced to the other conductive film can be reduced in the configuration.

The present invention can provide the following configurations, for example.

(1) An active matrix type liquid crystal display device with a first substrate, a second substrate and liquid crystal sandwiched between the first substrate and the second substrate with a display region made up of a set of a number of pixels arranged in a matrix,
a number of signal wires arranged in the outer periphery of the display region and a conductive film formed so as to cover the signal wires via an insulating film are provided on a surface of the first substrate on the liquid crystal side,
the first substrate is provided with a number of gate signal lines for supplying a scan signal to the number of pixels and a number of reference signal lines for supplying a reference signal to the number of pixels within the display region,
the number of signal wires include first signal wires provided at a first side of the display region and second signal lines provided at a second side of the display region which faces the first side,
the number of gate signal lines include first gate signal lines to which a signal is supplied through the first signal wires and second gate signal lines to which a signal is supplied through the second signal wires,
the conductive film is formed of a first conductive film provided so as to cover at least the first signal wires and a second conductive film provided so as to cover at least the above described second signal wires,
the number of reference signal lines include first reference signal lines electrically connected to the first conductive film on the first conductive film side and second reference signal lines electrically connected to the second conductive film on the second conductive film side, and
the first conductive film and the second conductive film to which signals are supplied are electrically isolated from each other.

(2) The liquid crystal display device of (1), the first conductive film is provided at the first side of the display region and the second conductive film is provided at the second side of the display region.

(3) The liquid crystal display device of (1),
the first conductive film is formed such that a portion is provided at the first side of the display region and another portion is provided at the second side of the display region so as to be electrically isolated from and parallel to the second conductive film, and
the portion of the first conductive film provided at the first side and the portion of the first conductive film provided at the second side are electrically connected.

(4) The display device of (1),
each of the above described number of pixels is provided on the first substrate side with a thin film transistor which is turned on by a signal supplied from a gate signal line, a pixel electrode to which a video signal is supplied from a drain signal line through the thin film transistor when turned on, and a counter electrode to which a signal is supplied through a common signal line,
the reference signal lines are the common signal lines, and
the liquid crystal is driven by an electrical field generated by the difference in the potential between a pixel electrode and a counter electrode.

(5) The liquid crystal display device of (4), the conductive film is formed of the same material as of the above described pixel electrodes or the counter electrodes in the same layer as the pixel electrodes or the counter electrodes.

(6) The liquid crystal display device of (1),
each of the number of pixels is provided on the first substrate side with a thin film transistor which is turned on by a scan signal supplied from a gate signal line, a pixel electrode to which a video signal is supplied from a drain signal line through the thin film transistor when turned on, and a capacitance signal line for inducing a capacitance between the pixel electrode and the capacitance signal line, and
the reference signal line is the capacitance signal line.

(7) The liquid crystal display device of (6), the above described conductive film is formed of the same material as of the above described pixel electrodes in the same layer as the above described pixel electrodes.

(8) The liquid crystal display device of (1), the first reference signal lines electrically connected to the first conductive film and the second reference signal lines electrically connected to the second conductive film are aligned alternately in the direction which crosses the longitudinal direction of the number of reference signal lines.

(9) An active matrix type liquid crystal display device with a first substrate, a second substrate and liquid crystal sandwiched between the first substrate and the second substrate with a display region made up of a set of a number of pixels arranged in a matrix,
a first scan signal drive circuit arranged at a first side of the display region, a second scan signal drive circuit arranged at a second side of the display region which faces the first side, and a conductive film formed so as to cover the first scan signal drive circuit and second scan signal drive circuit via an insulating film are provided on a surface of the first substrate on the liquid crystal side,
the first substrate is provided with a number of gate signal lines for supplying a scan signal to the number of pixels and a number of reference signal lines for supplying a reference signal to the number of pixels within the display region,
the number of gate signal lines include first gate signal lines to which a signal is supplied from an end on the first scan signal drive circuit side and second gate signal lines to which a signal is supplied from an end on the second scan signal drive circuit side,
the conductive film is formed of a first conductive film provided so as to cover at least the first scan signal drive circuit and a second conductive film provided so as to cover at least the second scan signal drive circuit,
the number of reference signal lines include first reference signal lines electrically connected to the first conductive film on the first conductive film side and second reference signal lines electrically connected to the second conductive film on the second conductive film side, and
the first conductive film and the second conductive film to which signals are supplied are electrically isolated from each other.

(10) The liquid crystal display device of (9), the first conductive film is provided at the first side of the display region and the second conductive film is provided at the second side of the display region.

(11) The liquid crystal display device of (9),
the first conductive film is formed such that a portion is provided at the first side of the display region and another portion is provided at the second side of the display region so as to be electrically isolated from and parallel to the second conductive film, and
the portion of the first conductive film provided on the first side and the portion of the first conductive film provided on the second side are electrically connected.

(12) The liquid crystal display device of (9),
each of the number of pixels is provided on the first substrate side with a thin film transistor which is turned on by a signal supplied from a gate signal line, a pixel electrode to which a video signal is supplied from a drain signal line through the thin film transistor when turned on, and a counter electrode to which a signal is supplied through a common signal line,
the reference signal lines are the above described common signal lines, and
the liquid crystal is driven by an electrical field generated by the difference in the potential between a pixel electrode and a counter electrode.

(13) The liquid crystal display device of (12), the conductive film is formed of the same material as of the pixel electrodes or the counter electrodes in the same layer as the pixel electrodes or the counter electrodes.

(14) The liquid crystal display device of (9),
each of the number of pixels is provided on the first substrate side with a thin film transistor which is turned on by a scan signal supplied from a gate signal line, a pixel electrode to which a video signal is supplied from a drain signal line through the thin film transistor when turned on, and a capacitance signal line for inducing a capacitance between the above described pixel electrode and the capacitance signal line, and
the reference signal line is the capacitance signal line.

(15) The liquid crystal display device of (14), the conductive film is formed of the same material as of the pixel electrodes in the same layer as the pixel electrodes.

(16) The liquid crystal display device of (9), the first reference signal lines electrically connected to the first conductive film and the second reference signal lines electrically connected to the second conductive film are aligned alternately in the direction which crosses the longitudinal direction of the number of reference signal lines.

Here, the above described configurations are merely examples and appropriate modifications are possible as long as the technological idea of the present invention is not deviated from. In addition, other examples of the configurations of the present invention than those described above will be clarified from the descriptions of the entirety of the present specification and the drawings.

In the liquid crystal display device according to the present invention, the difference in the parasitic capacitance between a number of conductive films formed so as to cover signal wires formed around the display region with an insulating film in between and signal wires covered by these conductive films can be reduced.

The other effects of the present invention will be clarified from the description of the entirety in the specification.

### BRIEF DESCRIPTION OF THE DRAWINGS

FIG. 1A and FIG. 1B are diagrams showing the configuration of the liquid crystal display device according to the first embodiment of the present invention;
FIG. 2A and FIG. 2B are diagrams showing the configuration of a pixel in the liquid crystal display device according to an example of the present invention;
FIG. 3A, FIG. 3B and FIG. 3C are diagrams showing the configuration of a comparative example for illustrating the effects of the present invention;
FIG. 4 is a diagram showing the configuration of the liquid crystal display device according to the second embodiment of the present invention;
FIG. 5 is a diagram showing the configuration of the liquid crystal display device according to the third embodiment of the present invention;
FIG. 6A and FIG. 6B are diagrams showing the configuration of an example of a conventional liquid crystal display device; and
FIG. 7 is a diagram illustrating parasitic capacitances between a conductive film and lead wires.

### DESCRIPTION OF PREFERED EMBODIMENTS

The embodiments of the present invention are described in reference to the drawings. Here, the same symbols are attached to the same or similar components in the figures and the embodiments, and the descriptions thereof are not repeated.

### <First Embodiment>

### (Configuration of the Entirety)

FIG. 1A and FIG. 1B are diagrams showing the configuration of the liquid crystal display device according to the first embodiment of the present invention. FIG. 1A is a plan diagram and FIG. 1B is a cross sectional diagram along line b-b in FIG. 1A. The liquid crystal display device (panel) PNL shown in FIG. 1A and FIG. 1B is an example of an IPS type liquid crystal display device.

In FIG. 1A, substrates SUB1 and SUB2 are provided so as to face each other and sandwich liquid crystal LC, and these substrates SUB1 and SUB2 form the outer frame of the liquid crystal display device (panel) PNL.

The substrate SUB2 has an area smaller than that of the substrate SUB1 and is provided so that a region of the substrate SUB1, for example, the lower side in the figure, is exposed. A semiconductor chip CH made of a circuit for driving pixels is mounted on the above described region where the substrate SUB1 is exposed from the substrate SUB2 in such a manner that the surface on which electrodes are formed faces downwards.

The substrate SUB2 is secured to the substrate SUB1 by means of a sealing material SL provided in the periphery of the substrate SUB2, and this sealing material SL also works to seal the liquid crystal LC between the substrates SUB1 and SUB2.

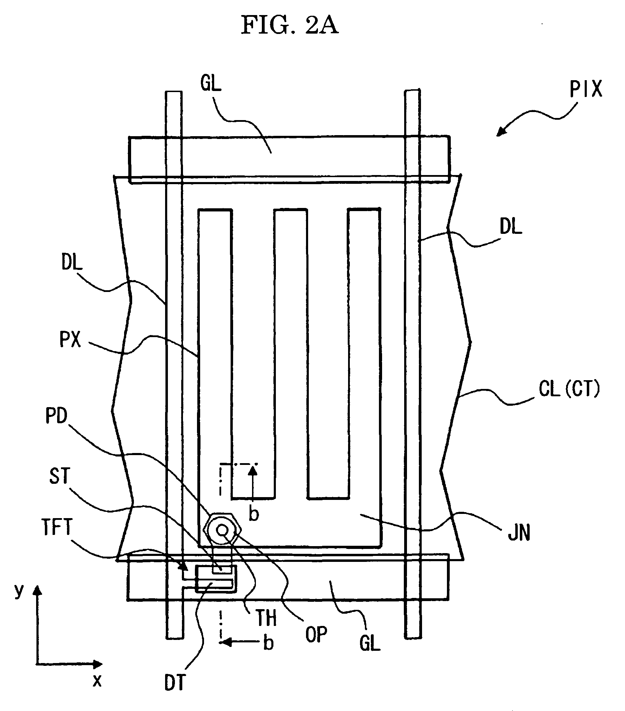

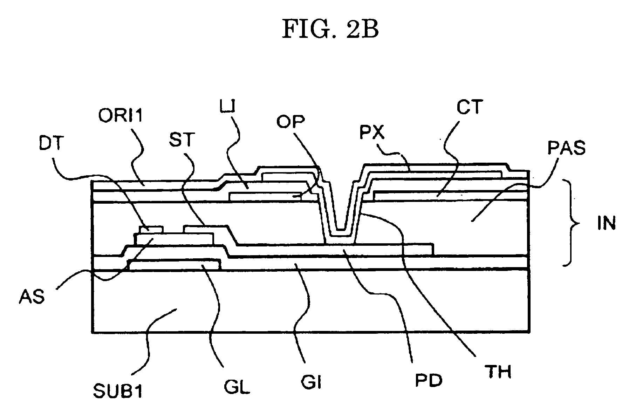

The center portion of the region surrounded by the sealing material SL, which excludes a slight amount of the periphery portion, is a display region AR (within the dotted frame A in the figure). A number of gate signal lines GL, which extend in the direction x in the figure and are aligned in the direction y, and a number of drain signal lines DL, which extend in the direction y in the figure and are aligned in the direction x, are formed in the display region AR. Thus, regions surrounded by pairs of adjacent gate signal lines GL and pairs of adjacent drain signal lines DL (within dotted frame B in the figure) are regions where pixels PIX are formed, and as a result, a number of pixels PIX arranged in a matrix are formed in the display region AR. The configuration of these pixels PIX is described below in reference to FIG. 2A and FIG. 2B. In addition, common signal lines CL are formed along the gate signal lines GL between pairs of adjacent gate signal lines GL. A signal having a reference potential for the below described video signal supplied to pixel electrodes PX (reference signal) is supplied to these common signal lines CL. Here, in FIG. 1A, the common signal lines CL have a greater width in comparison with the gate signal lines GL, for example. This illustrates that the common signal lines CL have such a structure as to also work as counter electrodes (denoted by the symbol CT in FIG. 2A and FIG. 2B) as described below.

The above described gate signal lines GL aligned in the direction y in the figure include those to which a signal (scan signal) is supplied from an end on one side and those to which a signal (scan signal) is supplied from an end on the other side, and they are arranged alternately, for example. That is to say, a number of lead wires WL (denoted by the symbol WL (1) in the figure) are aligned along the left side of the display region AR in the figure in the region within the sealing material SL at the left side of the display region AR in the figure, and these lead wires WL (1) are electrically connected to the output electrodes (not shown) of the above described semiconductor chip CH at one end and electrically connected to the corresponding gate signal lines GL at the other end. In addition, a number of lead wires WL (denoted by the symbol WL (2) in the figure) are aligned along the right side of the display region AR in the figure in the region within the sealing material SL at the right side of the display region AR in the figure, and these lead wires WL (2) are electrically connected to the output electrodes (not shown) of the above described semiconductor chip CH at one end and electrically connected to the corresponding gate signal lines GL at the other end.

As shown in FIG. 1B, an insulating film IN is formed as an upper layer of the above described lead wires WL (1), which are covered with a conductive film CEL (denoted by the symbol CEL (1) in the figure) formed on the surface of this insulating film IN. As a result, the electrical field LEF generated by the lead wires WL (1) can be prevented from distributing so as to reach the liquid crystal LC in the display region AR (leaking electrical field). In addition, though not shown, the above described lead wires WL (2) and the portions in the vicinity have the same structure as shown in FIG. 1B, and the conductive film CEL (denoted by the symbol CEL (2) in FIG. 1A) prevents the electrical field LEF generated by the lead wires WL (2) from distributing so as to reach the liquid crystal LC in the display region AR.

The above described common signal lines CL aligned in the direction y in the figure include those to which a signal is supplied from an end on one side and those to which a signal is supplied from an end on the other side, and they are aligned alternately, for example. Thus, the common signal lines CL are formed in two wire systems, and as a result, reference signals having opposite phases can be supplied, for example.

As shown in FIG. 1A, the common signal lines CL to which a signal is supplied from the left end in the figure are respectively and electrically connected to the conductive film CEL (1) aligned at the left side of the display region AR in the figure, and the conductive film CL (1) is electrically connected to a terminal TM (denoted by the symbol TM (1) in the figure) formed on the substrate SUB1 on the outside of the sealing material SL. As a result, a first reference signal is supplied from the terminal TM (1) to the above described common signal lines CL through the conductive film CEL (1). In addition, the common signal lines CL to which a signal is supplied from the right end in the figure are respectively and electrically connected to the conductive film CEL (2) aligned at the right side of the display region AR in the figure, and the conductive film CL (2) is electrically connected to a terminal TM (denoted by the symbol TM (2) in the figure) formed on the substrate SUB1 on the outside of the sealing material SL. As a result, a second reference signal is supplied from the terminal TM (2) to the above described common signal lines CL through the conductive film CEL (2). Here, the conductive film CEL (1) and the conductive film CEL (2) are electrically isolated from each other.

In addition, the end portions of the above described drain signal lines DL, which are on the lower side in the figure, extend beyond the sealing material SL and are electrically connected to the output electrodes (not shown) of the above described semiconductor chip CH.

Here, a black matrix (light shielding film) BM formed in the display region AR reaches to the region where the sealing material SL is formed on the surface of the above described substrate SUB2 on the liquid crystal side, and a flat film OC is formed so as to cover the black matrix BM. In addition, alignment films ORI1 and ORI2 are respectively formed on the surfaces of the substrates SUB1 and SUB2, which make contact with the liquid crystal LC at least in the display region AR.

### (Structure of Pixels)

FIG. 2A and FIG. 2B are diagrams showing the structure of an example of the above described pixels PIX. FIG. 2A is a plan diagram and FIG. 2B is a cross sectional diagram along line b-b in FIG. 2A.

First, gate signal lines GL, which extend in the direction x in the figure and are aligned in the direction y, are formed on the surface (front surface) of the substrate SUB1 on the liquid crystal side. These gate signal lines GL are formed so as to be integrated with the above described lead wires WL (1) or WL (2) in a region outside the display region AR, for example.

An insulating film GI is formed on the surface of the substrate SUB1 so as to cover the gate signal lines GL, and this insulating film GI functions as a gate insulating film in the regions where the below described thin film transistors TFT are formed.

A semiconductor layer AS made of amorphous Si, for example, is formed in an island form in the regions where thin film transistors TFT are formed on the surface of the insulating film GI so as to partially overlap the gate signal lines GL. In the above described thin film transistors TFT, a drain electrode DT and a source electrode ST are formed on the surface of the semiconductor layer AS so as to face each other so that a portion of the gate signal line GL is used as the gate electrode, and thus, an MIS (metal insulator semiconductor) type transistor having a reverse stagger structure is formed.

Drain signal lines DL, which extend in the direction y and are aligned in the direction x are formed on the surface of the above described substrate SUB1, and these drain signal lines DL partially extend on the surface of the above described semiconductor layer AS so that the extending portions become the above described drain electrodes DT in the thin film transistors TFT. In addition, when the drain signal lines DL are formed, the above described source electrodes ST of the thin film transistors TFT are formed, and these source electrodes ST are formed so as to extend beyond the region where the semiconductor layer AS is formed and have a pad PD that extends in the pixel region. This pad PD is formed so as to be electrically connected to the below described pixel electrode PX.

A passivation film PAS is formed on the surface of the above described substrate SUB1 so as to cover the drain signal lines DL and the like. This passivation film PAS is made of an insulating film so that the thin film transistors TFT can be prevented from making direct contact with the liquid crystal and has a multilayer structure of an inorganic insulating film and an organic insulating film, for example. The organic insulating film is used in order to provide such an effect that the surface of the passivation film PAS is flattened, for example.

Common signal lines CL are formed on the surface of the passivation film PAS in the direction in which the gate signal lines GL run between pairs of adjacent gate signal lines GL. These common signal lines CL are formed so as to cover almost the entirety of the pixel regions that are aligned in the direction x in the figure and have such a structure as to also work as the counter electrode CT in each pixel region. These common signal lines CL (counter electrodes CT) are formed of a light transmitting conductive film made of ITO (indium tin oxide), for example.

An interlayer insulating film LI is formed on the surface of the substrate SUB1 so as to cover the common signal lines CL (counter electrodes CT), and pixel electrodes PX are formed in the respective pixel regions on the upper surface of this interlayer insulating film LI. The pixel electrodes PX are formed of a number (for example, 3 as in the figure) of linear electrodes which extend in the direction y in the figure and are aligned in parallel in the direction x, for example, and these electrodes have a junction portion JN through which they are connected to each other at the ends on the above described thin film transistor TFT side. The pixel electrodes PX are formed of a light emitting conductive film made of ITO (indium tin oxide), for example. A portion of the junction portion JN in the pixel electrodes PX is electrically connected to the pad PD of the above described source electrode ST through a through hole TH created in the interlayer insulating film LI and the passivation film PAS. In this case, an opening OP, which is approximately coaxial with the above described through hole TH and has a diameter sufficiently greater than that of the through hole TH, is created in the common signal line CL (counter electrode CT) in advance so that the above described pixel electrode PX and the counter electrode CT are prevented from electrically short circuiting.

In addition, an alignment film ORI1 is formed on the surface of the substrate SUB1 so as to cover the pixel electrodes PX. This alignment film ORI1 is made of a film that makes contact with the liquid crystal LC and functions to determine the direction in which the molecules of the liquid crystal LC are initially aligned.

Thus, the liquid crystal LC is driven by the electrical field generated due to the difference in the potential between the pixel electrodes PX and the counter electrodes CT.

Here, the conductive films CEL (1) and CEL (2) shown in FIG. 1A and FIG. 1B are formed when the pixel electrodes PX are formed, for example, and as a result, formed of the same material as the pixel electrodes PX (for example, ITO). Thus, the above described conductive films CEL (1) and CEL (2) are formed in a layer which is as close to the liquid crystal LC as possible, and the number of manufacturing steps is prevented from increasing. The material is not limited to that of the pixel electrodes PX, and the conductive films may be formed of the same material as the counter electrodes CT when the counter electrodes CT are formed. Here, the insulating film IN shown in FIG. 1B is formed as a multilayer body of the insulating film GI, the passivation film PAS and the interlayer insulating film LI shown in FIG. 2B.

In the above described structure, the common signal lines CL also work as counter electrodes CT. However, they may be formed so as to be separated from each other. In this case, for example, the counter electrodes CT are transparent electrodes in a plane that are formed in the pixel regions so as to cover a major portion of the pixel regions, and the common signal lines CL may be formed in a metal layer having lines which connect these common electrodes CT to each other.

### <Comparative Example>

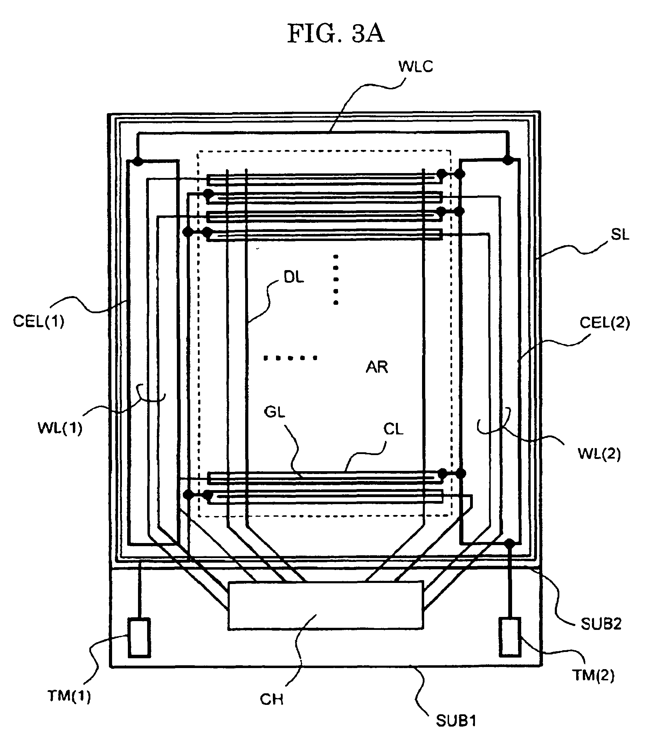

FIG. 3A shows a comparative example having the same structure as in the first embodiment where the common signal lines CL are formed so as to include those to which a signal is supplied from one end on one side and those to which a signal is supplied from an end on the other side. However, there is a difference and a disadvantage in the structure of the lines connected to a conductive film CEL (for example, the conductive film CEL (1)). FIG. 3A corresponds to FIG. 1A.

In FIG. 3A, the structure is different from that in FIG. 1A in that the conductive film CEL (1) is electrically connected to the conductive film CEL (2) through a wire WLC that runs on the upper side of the display region AR. In addition, the structure is also different from that in FIG. 1A in that the common signal lines CL other than those electrically connected to the above described conductive film CEL (2) are electrically connected to the terminal TM (1) without passing through the conductive film CEL (1). This structure also allows the conductive film CEL (1) and the conductive film CEL (2) to which a reference signal is supplied to have a stable shielding function against the electrical field (leaking electrical field) from the lead wires WL (1) and the lead wires WL (2), respectively.

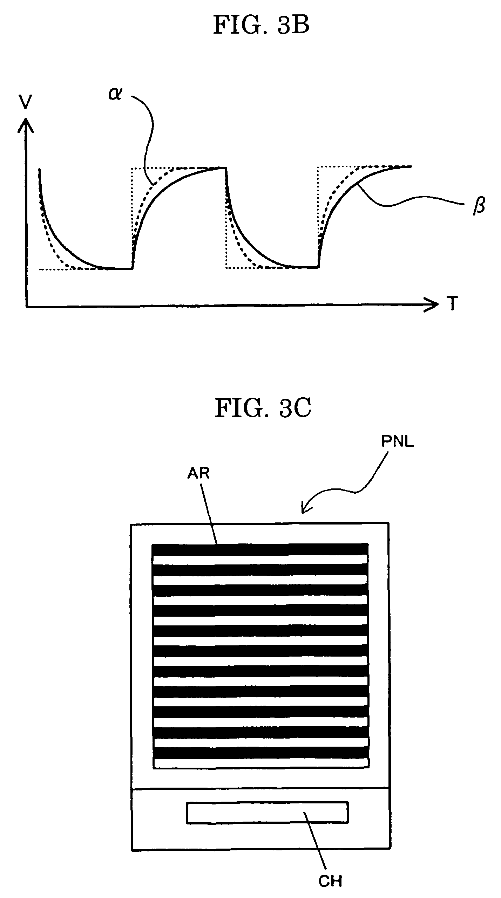

The common signal lines CL connected to the conductive film CEL (2), however, have a parasitic capacitance between the conductive film CEL (1) and the lead wires WL (1) in addition to a parasitic capacitance between the conductive film CEL (2) and the lead wires WL (2). Therefore, as shown in FIG. 3B, a reference signal α, of which the signal waveform is shown by the dotted line, is applied to the common signal lines CL which are directly and electrically connected to the terminal TM (1), while a reference signal β, of which the signal waveform in shown by the solid line, is applied to the other common signal lines which are electrically connected to the conductive film CEL (2), and the signal waveform of this reference signal β has a greater distortion than the signal waveform of the reference signal α. This is because the degree of the distortion in the waveform is in proportion to the product of the capacitance and the resistance of the signal lines. Here, in FIG. 3B, time (T) is taken along the lateral axis and the voltage (V) of the reference signal is taken along the lateral axis. In this case, as shown in FIG. 3C, there is a difference in the brightness in the display region AR of the liquid crystal display device PNL due to the difference in the waveform distortion between lines along which the common signal lines CL are formed, for example, between odd number lines and even number lines.

Conversely, in the structure shown in the first embodiment, some common signal lines CL aligned in parallel are connected to one conductive film (for example, conductive film CEL (1)) and the remaining common signal lines CL are connected to the other conductive film (for example, conductive film CEL (2)) so that these conductive films CEL (1) and CEL (2) are electrically isolated from each other and independent signals are supplied. As a result, the parasitic capacitance induced in one conductive film and the parasitic capacitance induced in the other conductive film can be adjusted separately, and thus, the difference in the parasitic capacitance between these can be reduced in the configuration.

### <Second Embodiment>

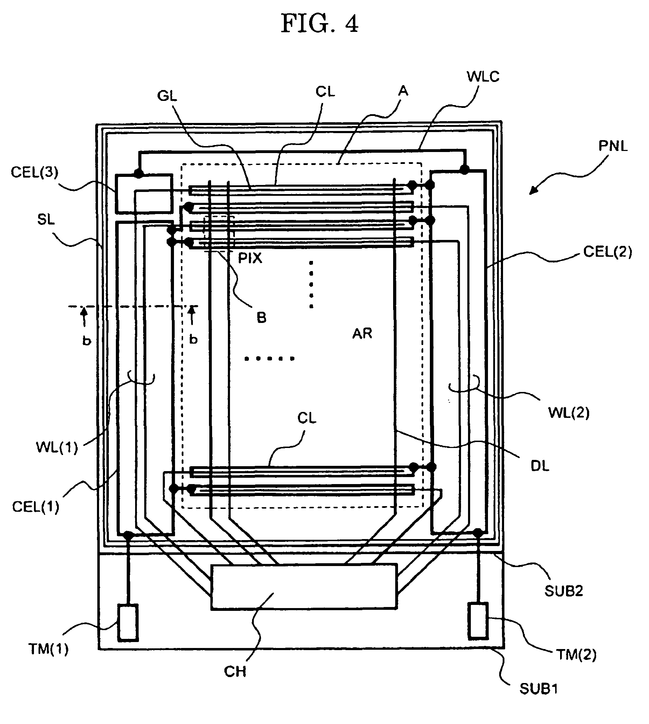

FIG. 4 is a diagram showing the configuration of the liquid crystal display device according to the second embodiment of the present invention. FIG. 4 corresponds to FIG. 1A.

In FIG. 4, the structure is different from that in FIG. 1A in that the conductive film CEL (1) and a conductive film CEL (3), which is electrically isolated from this conductive film CEL (1), are aligned in parallel at the left side of the display region AR in the figure, and this conductive film CEL (3) is electrically connected to the conductive film CEL (2) provided at the right side of the display region AR in the figure through a wire WLC provided on the upper side of the display region AR in the figure, for example.

The above described conductive film CEL (3) functions to increase the parasitic capacitance induced in the common signal lines CL electrically connected to the conductive film CEL (2) and to reduce the parasitic capacitance of the common signal lines CL electrically connected to the conductive film CEL (1).

Accordingly, the conductive film CEL (3) is located in a portion separated from the conductive film CEL (2) but electrically functions the same as the conductive film CEL (2). In this embodiment, as shown in FIG. 4, the conductive film CEL (3) is not directly connected to a common signal line CL, and the common signal lines CL provided in the proximity of the conductive film CEL (3) and not electrically connected to the conductive film CEL (2) are electrically connected to the conductive film CEL (1), detouring around the conductive film CEL (2).

In the case where the wires and the circuit formed beneath the conductive film CEL (1) and the conductive film CEL (2) are not symmetric on the left and the right, for example, this configuration makes it easy to adjust the parasitic capacitances even when the parasitic capacitance is not balanced between the left and the right in the configuration in the first embodiment.

### <Third Embodiment>

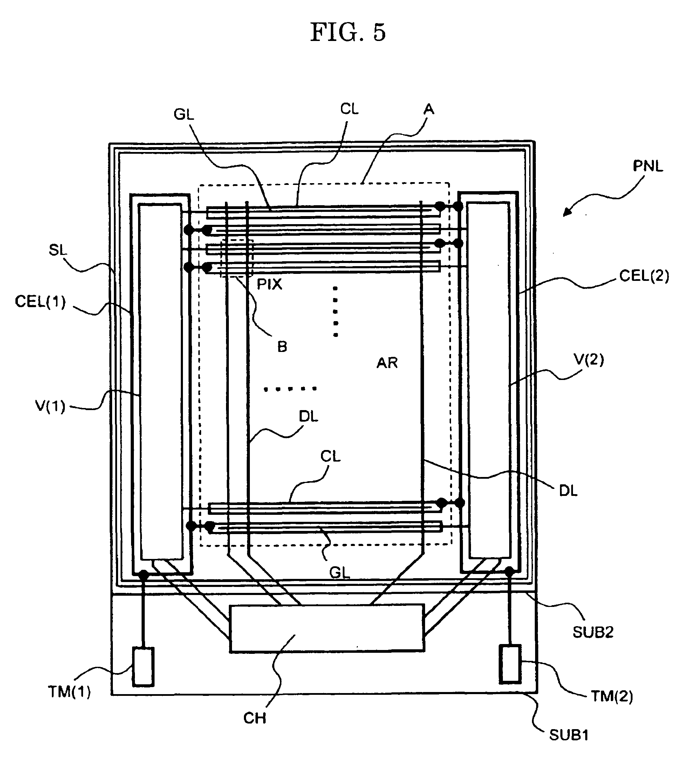

FIG. 5 is a diagram showing the configuration of the liquid crystal display device according to the third embodiment of the present invention. FIG. 5 corresponds to FIG. 1A.

In FIG. 5, the configuration is different from that in FIG. 1A in that a scan signal drive circuit V (denoted by the symbol V (1) in the figure) and a scan signal drive circuit V (denoted by the symbol V (2) in the figure) are formed at the left and the right, respectively, of the display region AR in the figure. The gate signal lines GL in the display region AR include those which are electrically connected to the scan signal drive circuit V (1) at an end on the scan signal drive circuit V (1) side and those which are electrically connected to the scan signal drive circuit V (2) at an end on the scan signal drive circuit V (2) side, and they are aligned alternately, for example.

Thus, the scan signal drive circuits V (1) and V (2) are respectively driven by a signal from the semiconductor chip CH and supply a scan signal to the gate signal lines GL. The scan signal drive circuits V (1) and V (2) are circuits in parallel which are formed of a number of thin film transistors when the display region AR is formed on the substrate SUB1. When these scan signal drive circuits V (1) and V (2) are provided, it becomes possible to make the semiconductor chip CH small in the configuration.

In addition, the conductive film CEL (1) is formed on the scan signal drive circuit V (1) with an insulating film in between so as to cover the scan signal drive circuit V (1), and the conductive film CEL (2) is formed on the scan signal drive circuit V (2) with an insulating film in between so as to cover the scan signal drive circuit V (2).

The conductive films CEL (1) and CEL (2) function to shield the electrical field from the scan signal drive circuits V (1) and V (2) so that the electrical field can be prevented from distributing within the liquid crystal LC in the display region AR, and the manner in which the conductive films are wired to the respective circuits in order to reduce the difference in the parasitic capacitance between the scan signal drive circuits V (1) and V (2) is the same as in FIG. 1A.

### <Fourth Embodiment>

The above described embodiments relate to lateral electrical field type liquid crystal display devices. However, the invention can be applied to a longitudinal electrical field type liquid crystal display device. In this case, a longitudinal electrical field type liquid crystal display device is provided with a substrate SUB1 on which pixel electrodes are formed, another substrate SUB2 that faces the substrate SUB1 with liquid crystal in between, and counter electrodes formed on the substrate SUB2 side, and thus, no common signal lines CL are formed on the substrate SUB1 side as described above in the configuration. In some cases, however, capacitance signal lines are formed on the substrate SUB1 instead of the common signal lines CL shown in FIG. 1A, for example, in order to provide capacitance between the capacitance signal lines and the pixel electrodes in the pixels, and these capacitance signal lines are formed in two wire systems in the same manner as the above described common signal lines CL. Accordingly, in this case also, the present invention can be applied. Even in the case of these capacitance signal lines, the supplied signals correspond to reference signals.

### <Fifth Embodiment>

In the above described embodiments, the conductive films CEL are formed so as to cover lead wires WL for the gate signal lines GL and the scan signal drive circuits V for supplying a scan signal to the gate signal lines GL. However, the conductive films CEL may be formed so as to cover the lead lines for the drain signal lines DL, or in the case where an RGB switching circuit (video signal time dividing circuit) connected to the drain signal lines DL or the like is formed, the conductive films CEL may be formed so as to cover the RGB switching circuit or the like. In the case where a protection circuit against static electricity is formed in the periphery of the display region AR, the conductive films may be formed so as to cover this protection circuit against static electricity.

## Claims

1. An active matrix type liquid crystal display device comprising:
a first substrate (SUB1), a second substrate (SUB2) and a liquid crystal (LC) sandwiched between the first substrate and the second substrate with a display region (AR) made up of a set of a number of pixels (PIX) arranged in a matrix, wherein
a number of signal wires (WL) arranged aside of the display region (AR) and a conductive film (CEL) formed so as to cover the signal wires via an insulating film (IN) are provided on a surface of the first substrate (SUB1) on the liquid crystal side, wherein
the first substrate (SUB1) is provided with a number of gate signal lines (GL) for supplying a scan signal to the number of pixels and a number of reference signal lines (CL) running in parallel to the direction of the gate lines, and connected to said conductive film (CEL) for supplying reference signals to the number of pixels within the display region (AR),
**characterized in that**
the number of signal wires (WL) include first signal wires (WL(1)) provided at a first side of the display region and second signal wires (WL(2)) provided at a second side of the display region which faces the first side,
the number of gate signal lines (GL) include first gate signal lines to which a signal is supplied through the first signal wires and second gate signal lines to which a signal is supplied through the second signal wires,
the conductive film (CEL) is formed of a first conductive film (CEL(1)) provided so as to cover at least the first signal wires (WL(1)) and a second conductive film (CEL(2)) provided so as to cover at least the second signal wires (WL(2)),
the number of reference signal lines include first reference signal lines electrically connected to the first conductive film (CEL(1)) on a first conductive film side and second reference signal lines electrically connected to the second conductive film (CEL(2)) on a second conductive film side, and
the first conductive film (CEL(1)) and the second conductive film (CEL(2)) to which said reference signals are supplied are electrically isolated from each other.

2. The liquid crystal display device according to Claim 1, wherein the first conductive film (CEL(1)) is provided at the first side of the display region (AR) and the second conductive film (CEL(2)) is provided at the second side of the display region (AR).

3. The liquid crystal display device according to Claim 1, wherein
each of the number of pixels is provided on a first substrate side with a thin film transistor (TFT) which can be turned on by a signal supplied from a gate signal line (GL), a pixel electrode (PX) to which a video signal can be supplied from a drain signal line (DL) through the thin film transistor when turned on, and a counter electrode (CT) to which a signal can be supplied through a common signal line,
the reference signal lines (CL) are the common signal lines, and
the liquid crystal is driven by an electrical field (LEF) generated by the difference in the potential between a pixel electrode (PX) and a counter electrode (CT).

4. The liquid crystal display device according to Claim 3, wherein the conductive film (CEL) is formed of the same material as the pixel electrodes (PX) or the counter electrodes (CT) in the same layer as the pixel electrodes (PX) or the counter electrodes (CT).

5. The liquid crystal display device according to Claim 1, wherein
each of the number of pixels is provided on a first substrate side with a thin film transistor (TFT) which can be turned on by a scan signal supplied from a gate signal line (GL), a pixel electrode to which a video signal can be supplied from a drain signal line (DL) through the thin film transistor when turned on, and a capacitance signal line for inducing a capacitance between the pixel electrode and the capacitance signal line, and
the reference signal line (CL) is the capacitance signal line.

6. The liquid crystal display device according to Claim 5, wherein the conductive film (CEL) is formed of the same material as the pixel electrodes (PX) in the same layer as the pixel electrodes.

7. The liquid crystal display device according to Claim 1, wherein the first reference signal lines electrically connected to the first conductive film (CEL(1)) and the second reference signal lines electrically connected to the second conductive film (CEL(2)) are arranged alternately in the direction which crosses the extension direction of the number of reference signal lines.

8. An active matrix type liquid crystal display device comprising:
a first substrate (SUB1), a second substrate (SUB2) and a liquid crystal (LC) sandwiched between the first substrate and the second substrate with a display region (AR) made up of a set of a number of pixels (PIX) arranged in a matrix, wherein
the first substrate (SUB1) is provided with a number of gate signal lines (GL) for supplying a scan signal to the number of pixels and a number of reference signal lines (CL) running in parallel to the direction of the gate lines, the reference signal lines for supplying reference signals to the number of pixels within the display region,
**characterized in that**
a first scan signal drive circuit (V(1)) arranged at a first side of the display region, a second scan signal drive circuit (V(2)) arranged at a second side of the display region which faces the first side, and a conductive film (CEL) formed so as to cover the first scan signal drive circuit and the second scan signal drive circuit via an insulating film (IN) are provided on a surface of the first substrate (SUB1) on the liquid crystal side,
the number of gate signal lines (GL) include first gate signal lines to which a signal is supplied from an end on the first scan signal drive circuit side and second gate signal lines to which a signal is supplied from an end on the second scan signal drive circuit side,
the conductive film (CEL) is formed of a first conductive film (CEL(1)) provided so as to cover at least the first scan signal drive circuit (V(1)) and a second conductive film (CEL(2)) provided so as to cover at least the second scan signal drive circuit (V(2)),
the number of reference signal lines (CL) include first reference signal lines electrically connected to the first conductive film (CEL(1)) on the first conductive film side and second reference signal lines electrically connected to the second conductive film (CEL(2)) on the second conductive film side, and
the first conductive film (CEL(1)) and the second conductive film (CEL(2)) to which said reference signals are supplied are electrically isolated from each other.

9. The liquid crystal display device according to Claim 8, wherein the first conductive film (CEL(1)) is provided at the first side of the display region and the second conductive film (CEL(2)) is provided at the second side of the display region.

10. The liquid crystal display device according to Claim 8, wherein
each of the number of pixels is provided on a first substrate side with a thin film transistor (TFT) which can be turned on by a signal supplied from a gate signal line (GL), a pixel electrode (PX) to which a video signal can be supplied from a drain signal line (DL) through the thin film transistor when turned on, and a counter electrode (CT) to which a signal can be supplied through a common signal line,
the reference signal lines (CL) are the common signal lines, and
the liquid crystal is driven by an electrical field (LEF) generated by the difference in the potential between a pixel electrode and a counter electrode.

11. The liquid crystal display device according to Claim 10, wherein the conductive film (CEL) is formed of the same material as the pixel electrodes (PX) or the counter electrodes (CT) in the same layer as the pixel electrodes or the counter electrodes.

12. The liquid crystal display device according to Claim 8, wherein
each of the number of pixels is provided on a first substrate side with a thin film transistor (TFT) which can be turned on by a scan signal supplied from a gate signal line (GL), a pixel electrode (PX) to which a video signal can be supplied from a drain signal line (DL) through the thin film transistor when turned on, and a capacitance signal line for inducing a capacitance between the pixel electrode and the capacitance signal line, and
the reference signal line (CL) is the capacitance signal line.

13. The liquid crystal display device according to Claim 12, wherein the conductive film (CEL) is formed of the same material as the pixel electrodes (PX) in the same layer as the pixel electrodes.

14. The liquid crystal display device according to Claim 8, wherein the first reference signal lines electrically connected to the first conductive film (CEL(1)) and the second reference signal lines electrically connected to the second conductive film (CEL(2)) are arranged alternately in the direction which crosses the extension direction of the number of reference signal lines (CL).

## Patentansprüche

1. Flüssigkristall-Anzeigevorrichtung vom Aktivmatrix-Typ, die aufweist:
ein erstes Substrat (SUB1), ein zweites Substrat (SUB2) und einen Flüssigkristall (LC), der zwischen dem ersten Substrat und dem zweiten Substrat in Sandwich-Anordnung vorgesehen ist, mit einem Anzeigebereich (AR), der aus einem Satz einer Anzahl von Pixeln (PIX) aufgebaut ist, die in einer Matrix angeordnet sind,
wobei
eine Anzahl von Signalleitungen (WL), die außerhalb des Anzeigebereichs (AR) angeordnet sind, und eine leitende Schicht (CEL), die so ausgebildet ist, dass sie die Signalleitungen über eine Isolierschicht (IN) überdeckt, auf einer Oberfläche des ersten Substrats (SUB1) auf der Flüssigkristallseite vorgesehen sind,
wobei
das erste Substrat (SUB1) mit einer Anzahl von Gatesignal-Leitungen (GL), die dazu dienen, ein Abtastsignal an die Anzahl von Pixeln zu liefern, und einer Anzahl von Referenzsignal-Leitungen (CL) versehen ist, die parallel zur Richtung der Gateleitungen verlaufen und mit der leitenden Schicht (CEL) verbunden sind und dazu dienen, Referenzsignale an die Anzahl von Pixeln innerhalb des Anzeigebereichs (AR) zu liefern,
**dadurch gekennzeichnet, dass**
die Anzahl von Signalleitungen (WL) erste Signalleitungen (WL(1)), die an einer ersten Seite des Anzeigebereichs vorgesehen sind, und zweite Signalleitungen (WL(2)) umfassen, die an einer zweiten Seite des Anzeigebereichs vorgesehen sind, die der ersten Seite gegenüber liegt,
die Anzahl der Gatesignal-Leitungen (GL) erste Gatesignal-Leitungen, an die durch die ersten Signalleitungen ein Signal geliefert wird, und zweite Gatesignal-Leitungen umfassen, an die durch die zweiten Signalleitungen ein Signal geliefert wird,
die leitende Schicht (CEL) durch eine erste leitende Schicht (CEL(1)), die so vorgesehen ist, dass sie zumindest die ersten Signalleitungen (WL(1)) überdeckt, und eine zweite leitende Schicht (CEL(2)) gebildet wird, die so vorgesehen ist, dass sie zumindest die zweiten Signalleitungen (WL(2)) überdeckt,
die Anzahl von Referenzsignal-Leitungen erste Referenzsignal-Leitungen, die auf einer Seite der ersten leitenden Schicht mit der ersten leitenden Schicht (CEL(1)) elektrisch verbunden sind, und zweite Referenzsignal-Leitungen umfassen, die auf einer Seite der zweiten leitenden Schicht mit der zweiten leitenden Schicht (CEL(2)) elektrisch verbunden sind,
und
die erste leitende Schicht (CEL(1)) und die zweite leitende Schicht (CEL(2)), an welche die Referenzsignale geliefert werden, voneinander elektrisch isoliert sind.

2. Flüssigkristall-Anzeigevorrichtung nach Anspruch 1, bei der die erste leitende Schicht (CEL(1)) an der ersten Seite des Anzeigebereichs (AR) und die zweite leitende Schicht (CEL(2)) an der zweiten Seite des Anzeigebereichs (AR) vorgesehen sind.

3. Flüssigkristall-Anzeigevorrichtung nach Anspruch 1, bei der
jedes Pixel der Anzahl von Pixeln auf einer ersten Seite des Substrats versehen ist mit einem Dünnschichttransistor (TFT), der durch ein von einer Gatesignal-Leitung (GL) geliefertes Signal eingeschaltet werden kann, einer Pixelelektrode (PX), an die ein Videosignal von einer Drainsignal-Leitung (DL) durch den Dünnschichttransistor geliefert werden kann, wenn dieser eingeschaltet ist, und einer Gegenelektrode (CT), an die ein Signal durch eine gemeinsame Signalleitung geliefert werden kann,
die Referenzsignal-Leitungen (CL) die gemeinsamen Signalleitungen sind
und
der Flüssigkristall durch ein elektrisches Feld (LEF) angesteuert wird, das durch die Potentialdifferenz zwischen einer Pixelelektrode (PX) und einer Gegenelektrode (CT) erzeugt wird.

4. Flüssigkristall-Anzeigevorrichtung nach Anspruch 3, bei der die leitende Schicht (CEL) aus dem gleichen Material gebildet ist wie die Pixelelektroden (PX) oder die Gegenelektroden (CT) in der gleichen Schicht wie die Pixelelektroden (PX) oder die Gegenelektroden (CT).

5. Flüssigkristall-Anzeigevorrichtung nach Anspruch 1, bei der
jedes Pixel der Anzahl von Pixeln auf einer ersten Seite des Substrats versehen ist mit einem Dünnschichttransistor (TFT), der durch ein von einer Gatesignal-Leitung (GL) geliefertes Abtastsignal eingeschaltet werden kann, einer Pixelelektrode, an die ein Videosignal von einer Drainsignal-Leitung (DL) durch den Dünnschichttransistor geliefert werden kann, wenn dieser eingeschaltet ist, und einer Kapazitäts-Signalleitung zur Erzeugung einer Kapazität zwischen der Pixelelektrode und der Kapazitäts-Signalleitung
und
die Referenzsignal-Leitung (CL) die Kapazitäts-Signalleitung ist.

6. Flüssigkristall-Anzeigevorrichtung nach Anspruch 5, bei der die leitende Schicht (CEL) aus dem gleichen Material gebildet ist wie die Pixelelektroden (PX) in der gleichen Schicht wie die Pixelelektroden.

7. Flüssigkristall-Anzeigevorrichtung nach Anspruch 1, bei der die ersten Referenzsignal-Leitungen, die mit der ersten leitenden Schicht (CEL(1)) elektrisch verbunden sind, und die zweiten Referenzsignal-Leitungen, die mit der zweiten leitenden Schicht (CEL(2)) elektrisch verbunden sind, abwechselnd in der Richtung angeordnet sind, welche die Richtung kreuzt, in der sich die Anzahl von Referenzsignal-Leitungen erstrecken.

8. Flüssigkristall-Anzeigevorrichtung vom Aktivmatrix-Typ, die aufweist:
ein erstes Substrat (SUB1), ein zweites Substrat (SUB2) und einen Flüssigkristall (LC), der zwischen dem ersten Substrat und dem zweiten Substrat in Sandwich-Anordnung vorgesehen ist, mit einem Anzeigebereich (AR), der aus einem Satz einer Anzahl von Pixeln (PIX) aufgebaut ist, die in einer Matrix angeordnet sind,
wobei
das erste Substrat (SUB1) mit einer Anzahl von Gatesignal-Leitungen (GL), die dazu dienen, ein Abtastsignal an die Anzahl von Pixeln zu liefern, und einer Anzahl von Referenzsignal-Leitungen (CL) versehen ist, die parallel zur Richtung der Gateleitungen verlaufen, wobei die Referenzsignal-Leitungen dazu dienen, Referenzsignale an die Anzahl von Pixeln innerhalb des Anzeigebereichs zu liefern,
**dadurch gekennzeichnet, dass**
auf einer Oberfläche des ersten Substrats (SUB1) auf der Flüssigkristallseite eine erste Abtastsignal-Treiberschaltung (V(1)), die an einer ersten Seite des Anzeigebereichs angeordnet ist, eine zweite Abtastsignal-Treiberschaltung (V(2)), die an einer zweiten Seite des Anzeigebereichs angeordnet ist, die der ersten Seite gegenüber liegt, und eine leitende Schicht (CEL) vorgesehen sind, die so ausgebildet ist, dass sie die erste Abtastsignal-Treiberschaltung und die zweite Abtastsignal-Treiberschaltung über eine Isolierschicht (IN) überdeckt,
die Anzahl von Gatesignal-Leitungen (GL) erste Gatesignal-Leitungen, an die ein Signal von einem Ende auf der Seite der ersten Abtastsignal-Treiberschaltung angelegt wird, und zweite Gatesignal-Leitungen umfassen, an die ein Signal von einem Ende auf der Seite der zweiten Abtastsignal-Treiberschaltung angelegt wird,
die leitende Schicht (CEL) durch eine erste leitende Schicht (CEL(1)), die so vorgesehen ist, dass sie zumindest die erste Abtastsignal-Treiberschaltung (V(1)) überdeckt, und eine zweite leitende Schicht (CEL(2)) gebildet wird, die so vorgesehen ist, dass sie zumindest die zweite Abtastsignal-Treiberschaltung (V(2)) überdeckt,
die Anzahl von Referenzsignal-Leitungen (CL) erste Referenzsignal-Leitungen, die auf der Seite der ersten leitenden Schicht mit der ersten leitenden Schicht (CEL(1)) elektrisch verbunden sind, und zweite Referenzsignal-Leitungen umfassen, die auf der Seite der zweiten leitenden Schicht mit der zweiten leitenden Schicht (CEL(2)) elektrisch verbunden sind,
und
die erste leitende Schicht (CEL(1)) und die zweite leitende Schicht (CEL(2)), an welche die Referenzsignale geliefert werden, voneinander elektrisch isoliert sind.

9. Flüssigkristall-Anzeigevorrichtung nach Anspruch 8, bei der die erste leitende Schicht (CEL(1)) an der ersten Seite des Anzeigebereichs und die zweite leitende Schicht (CEL(2)) an der zweiten Seite des Anzeigebereichs vorgesehen sind.

10. Flüssigkristall-Anzeigevorrichtung nach Anspruch 8, bei der
jedes Pixel der Anzahl von Pixeln auf einer ersten Seite des Substrats versehen ist mit einem Dünnschichttransistor (TFT), der durch ein von einer Gatesignal-Leitung (GL) geliefertes Signal eingeschaltet werden kann, einer Pixelelektrode (PX), an die ein Videosignal von einer Drainsignal-Leitung (DL) durch den Dünnschichttransistor geliefert werden kann, wenn dieser eingeschaltet ist, und einer Gegenelektrode (CT), an die ein Signal durch eine gemeinsame Signalleitung geliefert werden kann,
die Referenzsignal-Leitungen (CL) die gemeinsamen Signalleitungen sind
und
der Flüssigkristall durch ein elektrisches Feld (LEF) angesteuert wird, das durch die Potentialdifferenz zwischen einer Pixelelektrode und einer Gegenelektrode erzeugt wird.

11. Flüssigkristall-Anzeigevorrichtung nach Anspruch 10, bei der die leitende Schicht (CEL) aus dem gleichen Material gebildet ist wie die Pixelelektroden (PX) oder die Gegenelektroden (CT) in der gleichen Schicht wie die Pixelelektroden oder die Gegenelektroden.

12. Flüssigkristall-Anzeigevorrichtung nach Anspruch 8, bei der
jedes Pixel der Anzahl von Pixeln auf einer ersten Seite des Substrats versehen ist mit einem Dünnschichttransistor (TFT), der durch ein von einer Gatesignal-Leitung (GL) geliefertes Abtastsignal eingeschaltet werden kann, einer Pixelelektrode, an die ein Videosignal von einer Drainsignal-Leitung (DL) durch den Dünnschichttransistor geliefert werden kann, wenn dieser eingeschaltet ist, und einer Kapazitäts-Signalleitung zur Erzeugung einer Kapazität zwischen der Pixelelektrode und der Kapazitäts-Signalleitung
und
die Referenzsignal-Leitung (CL) die Kapazitäts-Signalleitung ist.

13. Flüssigkristall-Anzeigevorrichtung nach Anspruch 12, bei der die leitende Schicht (CEL) aus dem gleichen Material gebildet ist wie die Pixelelektroden (PX) in der gleichen Schicht wie die Pixelelektroden.

14. Flüssigkristall-Anzeigevorrichtung nach Anspruch 8, bei der die ersten Referenzsignal-Leitungen, die mit der ersten leitenden Schicht (CEL(1)) elektrisch verbunden sind, und die zweiten Referenzsignal-Leitungen, die mit der zweiten leitenden Schicht (CEL(2)) elektrisch verbunden sind, abwechselnd in der Richtung angeordnet sind, welche die Richtung kreuzt, in der sich die Anzahl von Referenzsignal-Leitungen (CL) erstrecken.

## Revendications

1. Dispositif d'affichage à cristaux liquides de type à matrice active comprenant :
un premier substrat (SUB1), un deuxième substrat (SUB2) et un cristal liquide (LC) pris en sandwich entre le premier substrat et le deuxième substrat avec une région d'affichage (AR) constituée d'un ensemble d'un nombre de pixels (PIX) agencés en une matrice, dans lequel
un nombre de fils de signaux (WL) agencés à l'écart de la région d'affichage (AR) et un film conducteur (CEL) formé de façon à recouvrir les fils de signaux par l'intermédiaire d'un film d'isolation (IN) sont prévus sur une surface du premier substrat (SUB1) sur le côté des cristaux liquides, dans lequel
le premier substrat (SUB1) est prévu avec un nombre de lignes de signaux de grille (GL) pour délivrer un signal de balayage au nombre de pixels et un nombre de lignes de signaux de référence (CL) courant en parallèle au sens des lignes de grille, et connectées audit film conducteur (CEL) pour délivrer des signaux de référence au nombre de pixels à l'intérieur de la région d'affichage (AR),
**caractérisé en ce que**
le nombre de fils de signaux (WL) inclut des premiers fils de signaux (WL(1)) prévus sur un premier côté de la région d'affichage et des deuxièmes fils de signaux (WL(2)) prévus sur un deuxième côté de la région d'affichage qui fait face au premier côté,
le nombre de lignes de signaux de grille (GL) inclut des premières lignes de signaux de grille auxquelles un signal est délivré par l'intermédiaire des premiers fils de signaux et des deuxièmes lignes de signaux de grille auxquelles un signal est délivré par l'intermédiaire des deuxièmes fils de signaux,
le film conducteur (CEL) est constitué d'un premier film conducteur (CEL(1)) prévu de façon à recouvrir au moins les premiers fils de signaux (WL(1)) et d'un deuxième film conducteur (CEL(2)) prévu de façon à recouvrir au moins les deuxièmes fils de signaux (WL(2)),
le nombre de lignes de signaux de référence inclut des premières lignes de signaux de référence électriquement connectées au premier film conducteur (CEL(1)) sur un premier côté de film conducteur et des deuxièmes lignes de signaux de référence électriquement connectées au deuxième film conducteur (CEL(2)) sur un deuxième côté de film conducteur, et
le premier film conducteur (CEL(1)) et le deuxième film conducteur (CEL(2)) auxquels lesdits signaux de référence sont délivrés sont électriquement isolés l'un de l'autre.

2. Dispositif d'affichage à cristaux liquides selon la revendication 1, dans lequel le premier film conducteur (CEL(1)) est prévu sur le premier côté de la région d'affichage (AR) et le deuxième film conducteur (CEL(2)) est prévu sur le deuxième côté de la région d'affichage (AR).

3. Dispositif d'affichage à cristaux liquides selon la revendication 1, dans lequel
chacun du nombre de pixels est prévu sur un premier côté de substrat avec un transistor en film mince (TFT) qui peut être activé par un signal délivré d'une ligne de signaux de grille (GL), une électrode de pixel (PX) à laquelle un signal vidéo peut être délivré d'une ligne de signaux de drain (DL) par l'intermédiaire du transistor en film mince lorsqu'il est activé, et une contre-électrode (CT) à laquelle un signal peut être délivré par l'intermédiaire d'une ligne de signaux commune,
les lignes de signaux de référence (CL) sont les lignes de signaux communes, et
le cristal liquide est piloté par un champ électrique (LEF) généré par la différence de potentiel entre une électrode de pixel (PX) et une contre-électrode (CT).

4. Dispositif d'affichage à cristaux liquides selon la revendication 3, dans lequel le film conducteur (CEL) est constitué du même matériau que les électrodes de pixel (PX) ou les contre-électrodes (CT) dans la même couche que les électrodes de pixel (PX) ou les contre-électrodes (CT).

5. Dispositif d'affichage à cristaux liquides selon la revendication 1, dans lequel
chacun du nombre de pixels est prévu sur un premier côté de substrat avec un transistor en film mince (TFT) qui peut être activé par un signal de balayage délivré d'une ligne de signaux de grille (GL), une électrode de pixel à laquelle un signal vidéo peut être délivré d'une ligne de signaux de drain (DL) par l'intermédiaire du transistor en film mince lorsqu'il est activé, et une ligne de signaux de capacitance pour induire une capacitance entre l'électrode de pixel et la ligne de signaux de capacitance, et
la ligne de signaux de référence est la ligne de signaux de capacitance.

6. Dispositif d'affichage à cristaux liquides selon la revendication 5, dans lequel le film conducteur (CEL) est constitué du même matériau que les électrodes de pixel (PX) dans la même couche que les électrodes de pixel.

7. Dispositif d'affichage à cristaux liquides selon la revendication 1, dans lequel les premières lignes de signaux de référence électriquement connectées au premier film conducteur (CEL(1)) et les deuxièmes lignes de signaux de référence électriquement connectées au deuxième film conducteur (CEL(2)) sont agencées de façon alternée dans le sens qui croise le sens d'extension du nombre de lignes de signaux de référence.

8. Dispositif d'affichage à cristaux liquides de type à matrice active comprenant :
un premier substrat (SUB1), un deuxième substrat (SUB2) et un cristal liquide (LC) pris en sandwich entre le premier substrat et le deuxième substrat avec une région d'affichage (AR) constituée d'un ensemble d'un nombre de pixels (PIX) agencés en une matrice, dans lequel
le premier substrat (SUB1) est prévu avec un nombre de lignes de signaux de grille (GL) pour délivrer un signal de balayage au nombre de pixels et un nombre de lignes de signaux de référence (CL) courant en parallèle au sens des lignes de grille, les lignes de signaux de référence pour délivrer des signaux de référence au nombre de pixels à l'intérieur de la région d'affichage,
**caractérisé en ce que**
un premier circuit de pilotage de signaux de balayage (V(1)) agencé sur un premier côté de la région d'affichage, un deuxième circuit de pilotage de signaux de balayage (V(2)) agencé sur un deuxième côté de la région d'affichage qui fait face au premier côté, et un film conducteur (CEL) formé de façon à recouvrir le premier circuit de pilotage de signaux de balayage et le deuxième circuit de pilotage de signaux de balayage par l'intermédiaire d'un film d'isolation (IN) sont prévus sur une surface du premier substrat (SUB1) sur le côté des cristaux liquides,
le nombre de lignes de signaux de grille (GL) inclut des premières lignes de signaux de grille auxquelles un signal est délivré d'une extrémité sur le côté de premier circuit de pilotage de signaux de balayage et des deuxièmes lignes de signaux de grille auxquelles un signal est délivré d'une extrémité sur le côté de deuxième circuit de pilotage de signaux de balayage,
le film conducteur (CEL) est constitué d'un premier film conducteur (CEL(1)) prévu de façon à recouvrir au moins le premier circuit de pilotage de signaux de balayage (V(1)) et d'un deuxième film conducteur (CEL(2)) prévu de façon à recouvrir au moins le deuxième circuit de pilotage de signaux de balayage (V(2)),
le nombre de lignes de signaux de référence (CL) inclut des premières lignes de signaux de référence électriquement connectées au premier film conducteur (CEL(1)) sur le premier côté de film conducteur et des deuxièmes lignes de signaux de référence électriquement connectées au deuxième film conducteur (CEL(2)) sur le deuxième côté de film conducteur, et
le premier film conducteur (CEL(1)) et le deuxième film conducteur (CEL(2)) auxquels lesdits signaux de référence sont délivrés sont électriquement isolés l'un de l'autre.

9. Dispositif d'affichage à cristaux liquides selon la revendication 8, dans lequel le premier film conducteur (CEL(1)) est prévu sur le premier côté de la région d'affichage et le deuxième film conducteur (CEL(2)) est prévu sur le deuxième côté de la région d'affichage.

10. Dispositif d'affichage à cristaux liquides selon la revendication 8, dans lequel
chacun du nombre de pixels est prévu sur un premier côté de substrat avec un transistor en film mince (TFT) qui peut être activé par un signal délivré d'une ligne de signaux de grille (GL), une électrode de pixel (PX) à laquelle un signal vidéo peut être délivré d'une ligne de signaux de drain (DL) par l'intermédiaire du transistor en film mince lorsqu'il est activé, et une contre-électrode (CT) à laquelle un signal peut être délivré par l'intermédiaire d'une ligne de signaux commune,
les lignes de signaux de référence (CL) sont les lignes de signaux communes, et
le cristal liquide est piloté par un champ électrique (LEF) généré par la différence de potentiel entre une électrode de pixel et une contre-électrode.

11. Dispositif d'affichage à cristaux liquides selon la revendication 10, dans lequel le film conducteur (CEL) est constitué du même matériau que les électrodes de pixel (PX) ou les contre-électrodes (CT) dans la même couche que les électrodes de pixel ou les contre-électrodes.

12. Dispositif d'affichage à cristaux liquides selon la revendication 8, dans lequel
chacun du nombre de pixels est prévu sur un premier côté de substrat avec un transistor en film mince (TFT) qui peut être activé par un signal de balayage délivré d'une ligne de signaux de grille (GL), une électrode de pixel (PX) à laquelle un signal vidéo peut être délivré d'une ligne de signaux de drain (DL) par l'intermédiaire du transistor en film mince lorsqu'il est activé, et une ligne de signaux de capacitance pour induire une capacitance entre l'électrode de pixel et la ligne de signaux de capacitance, et
la ligne de signaux de référence (CL) est la ligne de signaux de capacitance.

13. Dispositif d'affichage à cristaux liquides selon la revendication 12, dans lequel le film conducteur (CEL) est constitué du même matériau que les électrodes de pixel (PX) dans la même couche que les électrodes de pixel.

14. Dispositif d'affichage à cristaux liquides selon la revendication 8, dans lequel les premières lignes de signaux de référence électriquement connectées au premier film conducteur (CEL(1)) et les deuxièmes lignes de signaux de référence électriquement connectées au deuxième film conducteur (CEL(2)) sont agencées de façon alternée dans le sens qui croise le sens d'extension du nombre de lignes de signaux de référence (CL).
